# EUROPÄISCHE PATENTSCHRIFT

(11) **EP 3 360 717 B1**
(45) Veröffentlichungstag und Bekanntmachung des Hinweises auf die Patenterteilung: **29.07.2020**
(21) Anmeldenummer: 18153060.1
(22) Anmeldetag: 23.01.2018
(51) Int. Cl.: B60K 35/00, B60K 37/06, B60K 37/02

(54) **INFORMATIONSANZEIGEVORRICHTUNG FÜR EIN KRAFTFAHRZEUG, INSBESONDERE FÜR EIN NUTZFAHRZEUG**
INFORMATION DISPLAY DEVICE FOR A MOTOR VEHICLE, IN PARTICULAR FOR A COMMERCIAL VEHICLE
DISPOSITIF D'AFFICHAGE D'INFORMATIONS POUR UN VÉHICULE AUTOMOBILE, EN PARTICULIER POUR UN VÉHICULE UTILITAIRE

(30) Priorität: 08.02.2017 DE 102017001141
(43) Veröffentlichungstag der Anmeldung: 15.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE); Pongratz, Michael, 85414 Kirchdorf (DE); Wölfel, Christiane, 80337 München (DE); Baumann, Manuel, 85551 Kirchheim (DE)
(74) Vertreter: v. Bezold & Partner Patentanwälte - PartG mbB

(56) Entgegenhaltungen:
- CN-A- 103 365 697
- DE-A1- 10 246 012
- DE-A1-102006 017 054

## Beschreibung

Die Erfindung betrifft eine Informationsanzeigevorrichtung für ein Kraftfahrzeug, insbesondere für ein Nutzfahrzeug, mit der eine vorbestimmte Auswahl an Startinformationen anzeigbar ist.

Aus der Praxis ist bekannt, dass dem Fahrer eines Kraftfahrzeugs, beispielsweise eines Lastkraftwagens (LKW) oder Personenkraftwagens (PKW) zu Beginn der Fahrt im Display einer Informationsanzeigevorrichtung eine sogenannte Startanzeige bzw. ein Startbildschirm, d. h. eine spezielle lediglich bei Fahrzeugstart bereitgestellte Anzeige, angezeigt wird. Die Informationsanzeigevorrichtung ist beispielsweise Teil eines Fahrzeuginformations- und bediensystems (auch als Infotainmentsystem bezeichnet). Solche Fahrzeuginformations- und bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen über eine bestimmte Fahrzeugfunktion abrufen kann.

Der aus der Praxis bekannte Startbildschirm umfasst meist nur die Anzeige des Herstellerlogos und lediglich einiger weniger allgemeiner Standard-Informationen, wie beispielsweise die Uhrzeit, Datum und Kilometerstand. Diese Anzeige des Startbildschirms wird dann kurz nach dessen Anzeige durch eine vorbestimmte weitere Anzeige des Fahrzeuginformations- und bediensystems ersetzt, die für den normalen Fahrbetrieb vorgesehen ist.

Im Vergleich zu einem PKW-Fahrer benötigt ein LKW-Fahrer jedoch insbesondere bei Beginn einer Fahrt schnellen Zugriff auf wesentlich detailliertere Status-Informationen und spezielle Zusatzinformationen.

So müssen Berufslastkraftwagenfahrer in der heutigen Zeit zahlreiche Informationen unter hohem Zeitdruck verarbeiten. Der Fahrer muss unter Einhaltung von Lenk- und Ruhezeiten ein Fahrtenbuch führen bzw. Daten in den digitalen Tachographen eingeben und benötigt hierzu relevante Informationen, wie beispielsweise seinen genauen Standort inkl. die aktuelle Region bzw. das Bundesland, das Datum und die genaue Uhrzeit zu Beginn der Fahrt. Darüber hinaus können auch spezielle Daten, wie beispielsweise Angaben zu Frachtaufträgen und Frachtgut, in bestimmten Situationen einen wichtigen Beitrag zur fehlerfreien Abwicklung der Arbeitsaufgabe des Fahrers leisten.

Derartige Informationen werden auf den aus der Praxis bekannten Start-Bildschirmen nicht bereitgestellt. Aus diesem Grund muss der LKW-Fahrer in der heutigen Praxis für ihn relevante Daten bei Bedarf vor jeder Fahrt aus verschiedenen Informationsquellen selbst zusammenstellen und verarbeiten. Beispielsweise wird oftmals, neben anderen Informationen, die Region, z. B. das aktuelle Bundesland, in dem sich das Kraftfahrzeug gerade befindet, vor Fahrtantritt in das Fahrtenbuch oder in den digitalen Tachographen eingetragen. Gerade auf langen Fahrten ist es jedoch beispielsweise nicht selbstverständlich, dass der LKW-Fahrer spontan weiß, in welcher Region bzw. in welchem Bundesland er sich gerade aufhält, insbesondere bei Fahrten im Ausland. Folglich muss der Fahrer nach diesen Informationen im Zweifelsfall selbst suchen, was zeitaufwändig ist und die Abfahrtszeit verzögert. Ferner überprüfen LKW-Fahrer bei Fahrtantritt zum Zwecke der Tagesplanung, Routenplanung und Programmierung des Navigationsgeräts in der Regel ihre Lenk- und Ruhezeiten sowie Informationen in Bezug auf anstehende Frachtaufträge oder die geladene Fracht, Informationen betreffend die Verkehrslage etc. Diese hierfür relevanten Informationen muss der Fahrer wiederum in der Regel zeitaufwändig aus verschiedenen Quellen zusammenstellen bzw. jeweils Informationen aus verschiedenen Untermenüs der Informationsanzeigevorrichtung des Kraftfahrzeugs manuell abrufen.

Fahrer, die unter Zeitdruck stehen, werden durch das mühsame "Zusammensuchen" einzelner Informationen unnötig aufgehalten. Zusätzlich steigt dadurch die Gefahr, wichtige Arbeitsschritte zu vergessen oder über ein Telematik-System übermittelte Änderungen, beispielsweise betreffend den Frachtauftrag, zu übersehen.

Aus der Offenlegungsschrift DE 102 46 012 A1 ist eine Informationsanzeige für Nutzfahrzeuge, beispielsweise für Gabelstapler, bekannt. Die Informationsanzeige zeigt verschiedene Arten von das Nutzfahrzeug betreffende Informationen an. Hierbei wird für Nutzfahrzeuge, bei denen eine Startinspektion erforderlich ist, vorgeschlagen, eine Informationsanzeigeneinrichtung bereitzustellen, welche den Fahrer bei der Durchführung einer derartigen Startinspektion unterstützen soll. Dadurch soll das Auslassen der Inspektionen einzelner Inspektionsposten verhindert werden. Insbesondere wird vorgeschlagen, in Reaktion auf das Einschalten des Schlüsselschalters zum Starten des Fahrzeugs vorbestimmte Startinspektionsposten, die vorher eingestellt wurden, auf einem Anzeigeabschnitt der Informationsanzeigeeinrichtung anzuzeigen, so dass der Benutzer die Inspektion aufeinanderfolgend für jeden der angezeigten Startinspektionsposten auf Grundlagen der Anzeige durchführen kann.

Wenn die Inspektion sämtlicher Startinspektionsposten beendet ist, wird das Fahrzeug in einen betriebsbereiten Zustand versetzt.

Die vorgeschlagene Informationsanzeigeeinrichtung unterstützt somit lediglich den Vorgang einer Startinspektion bei Nutzfahrzeugen, bei denen eine solche Startinspektion vor Inbetriebnahme des Fahrzeugs erforderlich ist. Auch hier erfährt der Fahrer keine Unterstützung bei der Bereitstellung von Informationen aus Daten, die ein Fahrer, insbesondere ein LKW-Fahrer, vor Fahrtantritt benötigt.

Weiterhin ist auch aus der Offenlegungsschrift DE 10 2006 017 054 A1 eine Anzeigevorrichtung bekannt, welche einen ersten Anzeigenabschnitt zur Darstellung von Messinformationen sowie einen zweiten Anzeigenabschnitt zur Darstellung von Nachrichten und/oder Warninformationen umfasst. Hierbei wird bei jedem Einschaltvorgang, d. h. unabhängig davon, ob eine längere Standzeit vorlag oder nur ein kurzer Zwischenstopp erfolgte, immer der zweite Anzeigenabschnitt zuerst mit elektrischer Energie versorgt. Nachteilig daran ist jedoch, dass diese Priorisierung nicht immer dem Informationsbedürfnis des Fahrers gerecht wird, beispielsweise falls dieser in einem Stau nur kurzzeitig den Motor abgestellt hat.

Es ist somit eine Aufgabe der Erfindung, eine verbesserte Informationsanzeigevorrichtung für ein Kraftfahrzeug, insbesondere für ein Nutzfahrzeug, bereitzustellen, mit der Nachteile herkömmlicher Informationsanzeigevorrichtungen vermieden werden können. Die Aufgabe der Erfindung ist es insbesondere, eine Informationsanzeigevorrichtung bereitzustellen, die einem Fahrer des Kraftfahrzeugs die bei Fahrtbeginn notwendigen Informationen und Betriebsdaten auf einfache Weise bereitstellen kann.

Diese Aufgabe wird durch eine Informationsanzeigevorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Informationsanzeigevorrichtung für ein Kraftfahrzeug, insbesondere für ein Nutzfahrzeug, bereitgestellt. Die Informationsanzeigevorrichtung umfasst eine Anzeigefläche und eine mit der Anzeigefläche gekoppelte Steuereinrichtung, mit der eine wiedergebende Anzeige auf der Anzeigefläche steuerbar ist. Die Informationsanzeigevorrichtung kann hierbei Teil eines Fahrzeuginformations- und bediensystems bzw. eines Fahrzeug-Infotainmentsystems sein.

Die Informationsanzeigevorrichtung weist ferner eine Erkennungseinrichtung auf, die ausgebildet ist, zu ermitteln, ob eine Startanzeige-Aktivierungsbedingung erfüllt ist, aus der ableitbar ist, dass ein Fahrtbeginn des Kraftfahrzeugs unmittelbar bevorsteht oder zumindest wahrscheinlich ist. Die Steuereinrichtung ist ferner ausgebildet ist, auf der Anzeigefläche eine vorbestimmte Auswahl an Startinformationen anzuzeigen, falls die Startanzeige-Aktivierungsbedingung erfüllt ist.

Die Startanzeige-Aktivierungsbedingung stellt eine zweckmäßig gewählte Bedingung dar, deren Erfüllung darauf hindeutet, dass ein Fahrtbeginn bevorsteht. Unter einem Fahrtbeginn wird hierbei der Start einer Fahrt von einem Startort zu einem Zielort verstanden. Eine Wiederaufnahme bzw. Fortsetzung der Fahrt nach einer Pause oder bei zwischenzeitlichem Motoraus, beispielsweise bei einem Stau, soll dagegen nicht als Fahrtbeginn in Sinne dieser Erfindung verstanden werden. Ist das Kraftfahrzeug ein Nutzfahrzeug, insbesondere ein LKW, soll unter einem Fahrtbeginn der Zeitpunkt des Arbeitsantritts des Fahrers verstanden werden.

Mit anderen Worten ist die Erkennungsrichtung somit ausgeführt, anhand einer geeigneten Bedingung, was nachfolgend noch beispielhaft detaillierter erläutert wird, zu erkennen, ob ein Fahrtbeginn bevorsteht, und in diesem Falle dem Fahrer eine vorbestimmte Auswahl an Startinformationen anzuzeigen. Diese Anzeige der vorbestimmten Auswahl an Startinformationen auf der Anzeigefläche wird nachfolgend auch als Startanzeige oder Startbildschirm bezeichnet, wobei diese Startanzeige oder Startbildschirm vorzugsweise nicht die ganze Anzeigefläche, z. B. nicht den ganzen Bildschirm bzw. das ganze Display, der Informationsanzeigeeinrichtung einnimmt, sondern vorzugsweise nur einen Teil hiervon, wobei andere angezeigte Informationselemente teilweise überlappt werden können.

Erfindungsgemäß umfasst die vorbestimmte Auswahl an Startinformationen zumindest eine der folgenden Informationen: a) Aktuelle Standortdaten des Kraftfahrzeugs, mit einer alphanumerischen Angabe eines nächstliegenden Ortes und/oder einer Region, beispielsweise eines Bundeslands, in der sich das Kraftfahrzeug aktuell befindet, b) Lenk- und Ruhezeitinformationen, c) eine Information einer geladenen Fracht und/oder d) eine Information betreffend einen Frachtauftrag.

Die automatische Anzeige einer oder mehrerer dieser Informationen a) bis d) als Startinformationen vor einem Fahrzeugstart ist besonders vorteilhaft für Anwendungen im Nutzfahrzeugbereich, insbesondere bei kommerziellen Fahrten im LKW-Bereich. So ermöglicht beispielsweise die automatische Anzeige der aktuellen Standortdaten des Kraftfahrzeugs vor dem Fahrtbeginn im Rahmen eines Startbildschirms, insbesondere der automatischen alphanumerischen Angabe eines nächstliegenden Ortes und/oder einer Region, beispielsweise eines Bundeslandes, in dem sich das Kraftfahrzeug aktuell befindet, die schnelle Eingabe dieser Daten in den digitalen Tachographen des Fahrers. Insbesondere bei längeren Fahrten und Fahrten im Ausland weiß der Fahrer gelegentlich nicht, in welchem Bundesland oder in welcher Region er sich gerade befindet. Durch die automatische Anzeige der Region, z. B. des Bundesland, als Informationselement auf dem Startbildschirm hat der Fahrer diese Information sofort parat, kann sie in den Tachographen eingeben und muss sie nicht erst zeitaufwändig anderweitig nachschlagen bzw. ermitteln.

Entsprechendes gilt für die automatische Anzeige der Lenk- und Ruhezeitinformationen, die der Fahrer in der Regel vor Fahrtantritt überprüft bzw. überprüfen soll. Aus der Praxis ist bekannt, dass diese Lenk- und Ruhezeitinformationen vom Fahrer zwar durch manuelles Aufrufen entsprechender Menüs und Untermenüs des Kraftfahrzeuginformationssystems abgefragt werden können, dies erfordert jedoch wieder entsprechende Bedienzeiten. Das automatische bedarfsgerechte Anzeigen derartiger Informationen vor Fahrtbeginn spart dagegen dem Fahrer Zeit und stellt ihm diese Informationen zielgerichtet genau dann zur Verfügung, wenn er sie benötigt. Die Lenk- und Ruhezeitinformationen können auch Rest-Pausenzeiten, Rest-Fahrzeiten und die Wochenendarbeitszeit umfassen. So kann der Fahrer vor Fahrtbeginn sofort sehen, wie er seine Pausen- und Fahrtzeiten optimal einteilen kann.

Ferner ist es insbesondere für Frachtfahrten besonders vorteilhaft, auch die Information einer geladenen Fracht anzuzeigen. Dabei kann es sich beispielsweise um einen Zustand eines Kühlguts, beispielsweise die Kühltemperatur, handeln, oder Besonderheiten oder kritische Merkmale betreffend die Fracht, die während der Fahrt relevant werden können, wenn es sich z. B. um Flüssigkeiten oder zerbrechliche Güter handelt. In diesem Zusammenhang ist auch die automatische Anzeige einer Information betreffend einen Zustell- und/oder Frachtauftrag als Startinformation vorteilhaft. Hierbei kann es sich um Adress- bzw. Zustelldaten und allgemeine Lieferinformationen oder geänderte Auftragsdaten handeln, die bei der Planung der Fahrtroute benötigt werden. Ferner besteht die Möglichkeit, über ein Telematiksystem des Kraftfahrzeugs empfangene Änderungen oder neue Daten betreffend den Zustellauftrag automatisch als Teil der angezeigten vorbestimmten Startinformationen anzuzeigen.

Gemäß einer besonders bevorzugten Ausführungsform der Erfindung ist die vorbestimmte Auswahl an Startinformationen mittels einer Eingabeeinrichtung von einem Nutzer konfigurierbar, insbesondere personalisierbar. Eine vorteilhafte Variante dieser Ausführungsform sieht beispielsweise vor, dass der Nutzer in einem Konfigurationsmenü festlegen kann, welche Informationen ihm in dem Startmenü als Startbildschirm angezeigt werden sollen, so dass er zielgerichtet nur die auch wirklich benötigten Startinformationen angezeigt bekommt.

Gemäß einer besonders bevorzugten Ausführungsform der Erfindung erfolgt die Anzeige der vorbestimmten Auswahl an Startinformationen bei Fahrtbeginn noch vor dem Motorstart. Mit anderen Worten erfordert eine erfüllte Startanzeige-Aktivierungsbedingung, dass ein Start eines Antriebsmotors des Kraftfahrzeugs noch nicht erfolgt ist. Gegenüber den aus dem Stand der Technik bekannten Startbildschirmen, die erst nach Motorstart angezeigt werden, bietet diese Ausführungsform den Vorteil, dass der Fahrer die vor Fahrtantritt anfallenden Tätigkeiten, die durch die Anzeige der Startinformationen unterstützt werden, wie beispielsweise Eingabe der Daten in das Fahrtenbuch und den Tachographen, Programmierung des Fahrtroute im Navigationssystems, Überprüfung der Fracht des Fahrzeugs etc., durchführen kann, ohne dass ein kraftstoffverbrauchender Motorstart notwendig ist. Eine Kraftstoffeinsparung kann hierdurch erzielt werden.

Gemäß einer weiteren vorteilhaften Ausführungsform ist die Steuerungseinrichtung ausgebildet, nach einem Motorstart die vorbestimmte Auswahl an Startinformationen auf der Anzeigefläche auszublenden, d. h. nicht mehr anzuzeigen und durch eine andere Informationsanzeige zu ersetzen. Mit anderen Worten wird die Startinformation noch vor dem Motorstart angezeigt und erlischt automatisch mit dem Motorstart. Die vorbestimmte Auswahl an Startinformationen wird bei Fahrtantritt nicht mehr oder zumindest nicht mehr vollständig benötigt, so dass diese dann ausgeblendet werden können und durch andere geeignete Anzeigen ersetzt werden können, wie beispielsweise die Anzeige der analogen oder virtuellen Instrumente (z. B. Tachometer, Drehzahlmesser) des Cockpits, der Routenführung des Navigationssystems o. Ä.

Vorstehend wurde bereits festgestellt, dass die Startanzeige-Aktivierungsbedingung eine zweckmäßig gewählten Bedingung entspricht, deren Erfüllung darauf hindeutet, dass ein Fahrtbeginn bevorsteht. Beispielsweise kann die Startanzeige-Aktivierungsbedingung erfüllt sein, wenn die Erkennungseinrichtung eine oder mehrere der folgenden Situationen erkennt:
- Ein Fahrer betritt das Kraftfahrzeug, insbesondere das Fahrerhaus,
- eine Fahrertür wird geöffnet,
- eine Person nimmt Platz auf dem Fahrersitz,
- ein Bedienelement, beispielsweise auf einem Multifunktionslenkrad wird betätigt,
- eine Zündung wird aktiviert,
- eine erfasste Temperatur liegt unterhalb eines vorbestimmten Schwellenwerts, wobei ein Unterschreiten des Schwellenwerts anzeigt, dass der Verbrennungsmotor des Kraftfahrzeugs nicht aufgewärmt ist.

Ein Fahrtbeginn kann besonders zuverlässig erkannt werden, wenn mehrere der vorstehend genannten Situationen bzw. Bedingungen kombiniert werden. Wenn z. B. der Fahrer die Fahrertür öffnet und anschließend auf dem Fahrersitz Platz nimmt, was jeweils durch entsprechende Sensoren (z. B. Türöffnungssensoren, Sitzsensor) festgestellt werden kann, und gleichzeitig der Motor kalt ist, d. h., die Motortemperatur liegt unterhalb eines vorbestimmten Schwellenwerts, kann darauf geschlossen werden, dass ein Fahrtbeginn bevorsteht oder zumindest wahrscheinlich ist und es sich nicht nur um eine Wiederaufnahme einer Fahrt nach einer kurzen Pause handelt, denn dann wäre der Motor warm. Eine besonders vorteilhafte Ausführungsvariante sieht vor, dass die vorbestimmten Startinformationen nicht nur vor dem Motorstart, sondern bereits vor Aktivierung der Zündung angezeigt werden. Bei dieser Variante kann dann die Aktivierung der Zündung nicht als Startanzeige-Aktivierungsbedingung herangezogen werden.

Es wird betont, dass die vorstehend genannten Möglichkeiten zur Erkennung der Startanzeige-Aktivierungsbedingung lediglich beispielhaft sind und grundsätzlich verschiedene Erkennungslogiken bzw. Erkennungsverfahren denkbar sind, die die Erkennung eines Fahrtbeginns ermöglichen. Entscheidend ist, dass zuverlässig erfasst werden kann, ob ein Fahrtbeginn bevorsteht.

Eine weitere einfache Ausführungsvariante wäre die, dass ein spezielles Bedienelement, beispielsweise eine Taste oder ein Schalter am Multifunktionslenkrad, vorgesehen ist, die speziell dafür vorgesehen ist, die Startinformationen aufzurufen. So kann der Fahrer durch Betätigen eines einzelnen Bedienelements zuverlässig Startinformationen bei Bedarf, insbesondere bei Fahrtbeginn, abrufen, und es besteht keine Unsicherheit dahingehend, ob wirklich ein Beginn einer neuen Fahrt oder nur eine Wiederaufnahme einer bestehenden Fahrt durchgeführt wird.

Neben den vorgenannten Informationen wie Standortdaten, Lenk- und Ruhezeitinformationen und die Fracht bzw. den Frachtauftrag betreffende Informationen kann die vorbestimmte Auswahl an Startinformationen vorteilhafterweise weitere Informationen umfassen. Beispielsweise kann die vorbestimmte Auswahl an Startinformationen eine Uhrzeit- und Datumsangabe umfassen, vorzugsweise unter Angabe des Wochentags. Dies ist für die Führung des Fahrtenbuchs vorteilhaft. Ferner kann die vorbestimmte Auswahl an Startinformationen eine Außentemperaturangabe umfassen sowie GPS-Koordinaten des aktuellen Standorts. Eine weitere vorteilhafte Information, die als Teil der Startinformation bereitgestellt werden kann, sind Angaben über den Füllstand des Kraftstofftanks und/oder des AdBlue®-Tanks, so dass diese Informationen bereits angezeigt werden, bevor ein Motorstart oder die Zündung aktiviert wird.

Die vorbestimmte Auswahl an Startinformationen kann ferner den Gesamtkilometerstand und/oder Angaben über den Reifendruck und/oder den Druck in den Druckluftkreisen umfassen. Die vorbestimmte Auswahl an Startinformationen kann ferner Verkehrsmeldungen inklusive Staumeldungen umfassen, die für den Fahrer bei Fahrtbeginn zur Planung nützlich sind. Ferner können Statusmeldungen über programmierbare Funktionen, beispielsweise eine Weckfunktion, bereitgestellt werden.

Vorstehend wurde bereits erwähnt, dass es besonders vorteilhaft ist, wenn die vorstehend genannten Beispiele für mögliche Startinformationen in Abhängigkeit von der Personalisierung oder Konfiguration durch den Fahrer zusammengestellt und in dieser Zusammenstellung ein- und ausgeblendet werden können. Ein besonderer Vorzug der Erfindung liegt somit darin, dass mit der erfindungsgemäßen Bereitstellung der Startinformation dem Fahrer eine strukturierte und kompakte Informationsanzeige bereitgestellt wird, so dass der Fahrer die bei Fahrtbeginn benötigten Informationen schnell griffbereit hat und nicht aus verschiedenen Quellen abrufen muss. Die strukturierte und kompakte Bereitstellung der erfindungsgemäßen Startinformationsanzeige dient dem Fahrer ferner als Erinnerungsstütze, beispielsweise in Bezug auf Fehlermeldungen, Pausenzeiten oder Besonderheiten der Fracht, und verringert dadurch zusätzlichen Stress bzw. Fehler im Arbeitsablauf.

Eine weitere vorteilhafte Möglichkeit der erfindungsgemäßen Realisierung sieht vor, dass zur Darstellung der vorbestimmten Auswahl an Startinformationen eine graphische Darstellung des Kraftfahrzeugs verwendet wird, wobei Statusinformationen betreffend einen Betriebszustand des Kraftfahrzeugs unter Verwendung der graphischen Darstellung des Kraftfahrzeugs angezeigt werden. So können beispielsweise Angaben über die Tankfüllstände des Kraftstofftanks oder des AdBlue®-Tanks sowie Angaben über Reifendruck und Druck in den Druckluftkreisen unter Einbeziehung der graphischen Darstellung des Kraftfahrzeugs angezeigt werden, so dass die technischen Statusinformationen zu graphisch dargestellten Fahrzeugkomponenten zugeordnet dargestellt werden. Dies erleichtert die intuitive Informationsverarbeitung durch den Fahrer.

Gemäß einem weiteren Aspekt kann die Anzeigefläche der Informationsanzeigevorrichtung der Bildschirm (das Display) eines Kombi-Instruments sein. Derartige "Kombi-Instrumente" sind an sich aus dem Stand der Technik bekannt und werden in modernen Fahrzeugen zur Darstellung der aktuellen Fahrzeug- bzw. Umgebungswerte verwendet. Sie besitzen einen großen Bildschirm, auf dem Bilder und virtuelle Instrumente dargestellt werden können. Es sind auch Ausführungsvarianten bekannt, bei denen analoge Instrumente von einem Bildschirm umgeben sind.

Gemäß einem weiteren Aspekt kann die vorbestimmte Auswahl an Startinformationen in einem mittleren Bereich auf der Anzeigefläche ohne Überlappung anderer Anzeigen angezeigt werden. Beispielsweise kann die vorbestimmte Auswahl an Startinformationen in einem Teilbereich der Anzeigefläche angezeigt werden, der mittig von zwei (virtuellen oder analogen) Rundinstrumenten (z. B. Tachometer, Drehzahlmesser) angeordnet ist.

Eine andere Möglichkeit der erfindungsgemäßen Realisierung sieht dagegen vor, dass der Bereich zur Anzeige der vorbestimmten Auswahl an Startinformationen mit anderen auf der Anzeigefläche angezeigten Elementen überlappt. Bei dieser Variante kann dann nach Start des Motors die Startinformation ausgeblendet werden, so dass die Überlappung beendet wird und die vorher überlappenden Elemente nun vollständig sichtbar sind zur Aufnahme des Fahrbetriebs.

Ein weiterer Aspekt der Erfindung betrifft ein Nutzfahrzeug, umfassend eine Informationsanzeigevorrichtung wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Informationsanzeigevorrichtung gemäß einem ersten Ausführungsbeispiel;
- Figur 2: ein Ablaufdiagramm zur beispielhaften Illustration der Arbeitsweise einer Informationsanzeigevorrichtung gemäß einem Ausführungsbeispiel der Erfindung;
- Figur 3: eine schematische Darstellung einer Informationsanzeigevorrichtung gemäß einem zweiten Ausführungsbeispiel; und
- Figur 4: eine Anzeigefläche, die Startinformationen anzeigt gemäß einem Ausführungsbeispiel.

Gleiche oder funktional äquivalente Elemente sind in allen Figuren mit denselben Bezugszeichen bezeichnet und werden zum Teil nicht gesondert beschrieben.

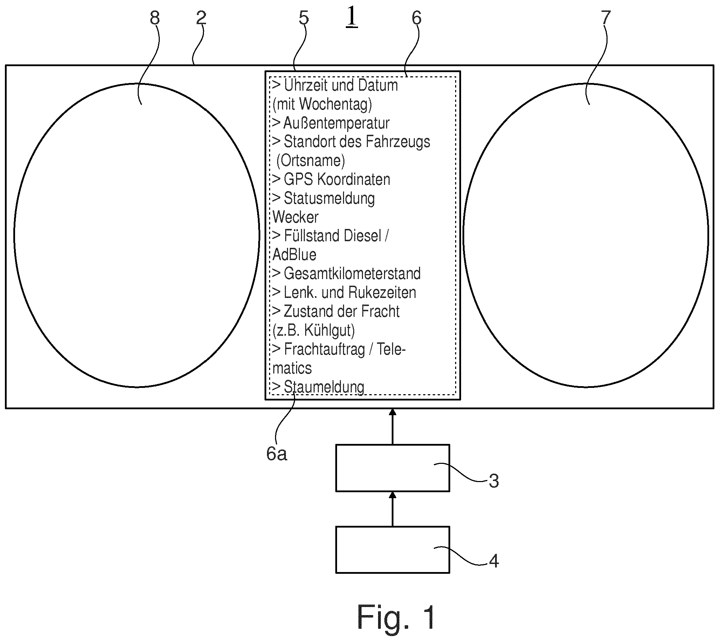

Figur 1 zeigt eine schematische Darstellung einer Informationsanzeigevorrichtung eines Nutzfahrzeugs gemäß einem ersten Ausführungsbeispiel. Wie in Figur 1 lediglich stark schematisiert dargestellt ist, umfasst die Informationsanzeigevorrichtung 1 eine Anzeigefläche 2 eines sogenannten "Kombi-Instruments". Die Anzeigefläche 2 wird durch einen Bildschirm gebildet, der mit einer Steuereinrichtung 3 zum Steuern einer Anzeige auf der Anzeigefläche 2 gekoppelt ist. Lediglich beispielhaft können auf der Anzeigefläche 2 virtuelle Rundinstrumente 7 und 8, beispielsweise zur Darstellung eines virtuellen (d. h. nicht analogen) Tachometers und eines virtuellen Drehzahlmessers, verwendet werden. Zwischen den beiden virtuellen Rundinstrumenten 7, 8 ist ein weiterer Anzeigeabschnitt 5 vorgesehen, der je nach Betriebsmodus zur Ausbildung eines Startbildschirms 6, dargestellt durch die gepunktete Linie, verwendet wird.

Die erfindungsgemäße Startanzeige soll dem Fahrer bei Fahrtbeginn und vorzugsweise vor dem Motorstart ausgewählte Startinformationen anzeigen. Dementsprechend wird zweckmäßig eine Startanzeige-Aktivierungsbedingung gewählt, die dann erfüllt ist, wenn der Fahrer eine Fahrt beginnen möchte. In diesem Fall benötigt der Fahrer dann verschiedene Informationen, die ihm im Startbildschirm bereitgestellt werden.

Ein Fahrtbeginn soll dann vorliegen, wenn der Fahrer eine neue Fahrt von einem Start zu einem bestimmten Ziel beginnt. Ein Zeitpunkt des Fahrtbeginns entspricht somit dem Zeitpunkt des Arbeitsantritts des Fahrers und nicht nur einer Wiederaufnahme der Fahrt nach einer kurzen Pause oder nach einem zwischenzeitlichen Motoraus bei einem Stau während einer Fahrt. Eine solche automatische Erkennung, ob ein Fahrbeginn bevorsteht, kann durch Kombination verschiedener Sensorsignale oder Verhaltensmuster erkannt werden. Beispielsweise können Sensorsignale, die anzeigen dass die Fahrertür geöffnet wird und eine Person anschließend auf dem Fahrersitz Platz nimmt, in Kombination mit einem kalten Motor darauf hindeuten, dass ein Fahrtbeginn bevorsteht. Dementsprechend können derartige Signale genutzt werden, um zu bestimmen, ob eine Startanzeige-Aktivierungsbedingung erfüllt ist. Selbstverständlich sind weitere Varianten oder andere Erkennungslogiken denkbar, solange hieraus zuverlässig abgeleitet werden kann, dass ein Fahrtantritt bevorsteht oder zumindest wahrscheinlich ist.

Das Nutzfahrzeug umfasst daher ferner eine Erkennungseinrichtung 4, die ausgebildet ist zu ermitteln, ob eine Startanzeige-Aktivierungsbedingung erfüllt ist, aus der ableitbar ist, dass ein Fahrtbeginn des Kraftfahrzeugs unmittelbar bevorsteht oder zumindest wahrscheinlich ist. Die hier schematisch dargestellte Erkennungseinrichtung 4 kann beispielsweise programmtechnisch als Teil einer Fahrzeugsteuerung ausgebildet sein, die in Kommunikationsverbindung mit verschiedenen Sensoren steht, um in Abhängigkeit der Sensorsignale zu ermitteln, ob eine vorgegebene Startanzeige-Aktivierungsbedingung erfüllt ist.

Vorstehend wurde bereits erwähnt, dass die Erkennungseinrichtung 4 ausgebildet sein kann, die Erfüllung der Startanzeige-Aktivierungsbedingung lediglich beispielhaft daran zu erkennen, dass der Fahrer die Fahrertür öffnet und anschließend auf dem Fahrersitz Platz nimmt, was jeweils durch entsprechende Sensoren (z. B. Türöffnungssensoren, Sitzsensor) festgestellt werden kann, wobei gleichzeitig überprüft wird, ob der Motor kalt ist, d.h. die Motortemperatur unterhalb eines vorbestimmten Schwellenwerts liegt.

Alternativ oder zusätzlich kann die Erkennungseinrichtung 4 jedoch auch ausgeführt sein, die Erfüllung der Startanzeige-Aktivierungsbedingung daran zu erkennen, dass ein von einem Nutzer betätigbares Bedienelement (nicht darstellt) zur Aktivierung der Startanzeige betätigt wird, z. B. in Form eines hierfür speziell vorgesehenen Schalters, einer Taste etc., das bei Betätigung dann zur Anzeige des Startbildschirms 6 auf der Anzeigefläche 2 führt.

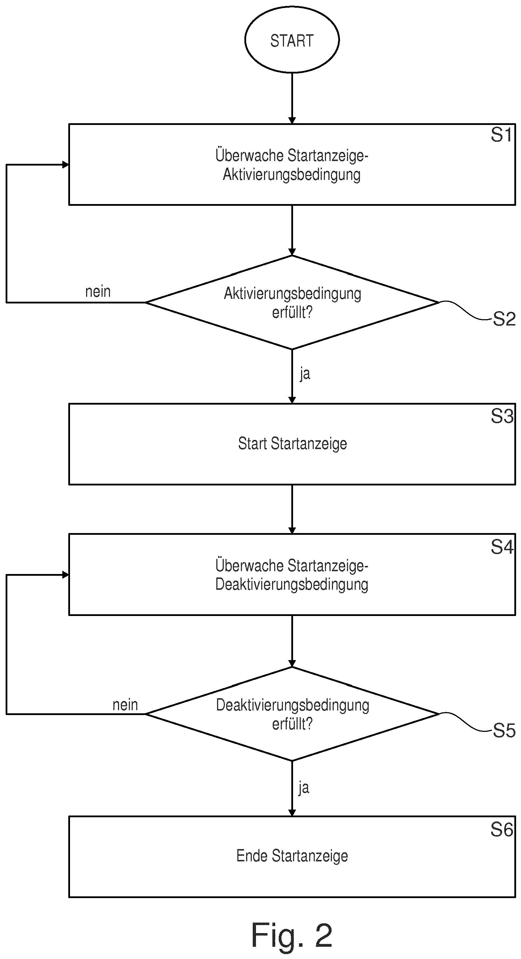

Figur 2 illustriert schematisch die Arbeitsweise einer Informationsanzeigevorrichtung gemäß einem Ausführungsbeispiel der Erfindung. In einem ersten Schritt S1 wird fortlaufend von der Erkennungseinrichtung 4 überwacht, ob eine vorgegebene Startanzeige-Aktivierungsbedingung erfüllt ist.

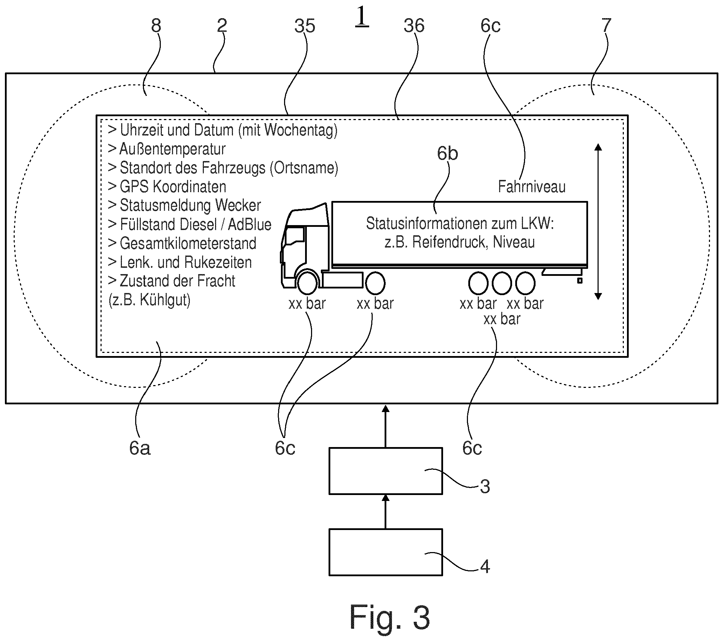

Die Startanzeige-Überwachungsbedingung wird in Schritt 1 solange überwacht, bis diese erfüllt ist. Wird somit in einem Schritt S2 festgestellt, dass die Aktivierungsbedingung erfüllt ist, wird anschließend auf der Anzeigefläche in dem Anzeigeabschnitt 5 die Startanzeige 6 angezeigt. Hierbei erscheint vor Motorstart eine Anzeige im Kombi-Instrument mit Informationen 6a, die der Fahrer in diesem Moment benötigt. Dieser Startbildschirm 6 kann wie in Figur 2 gezeigt als eigenes digitales Fenster mittig (oder auch seitlich) im Display des Kombi-Instruments erscheinen oder wie in Figur 3 dargestellt auch Teile oder andere Elemente des Displays überdecken, die vor Abfahrt nicht benötigt werden, wie beispielsweise die Tachoanzeige 8 oder den Drehzahlmesser 7.

Folgende Parameter bzw. Basisinformationen 6a können z. B. in der Startanzeige 6 beinhaltet sein und je nach Konfiguration oder Personalisierung ein- und ausgeblendet werden, d. h., der Fahrer kann festlegen, ob er zu allen Parametern 6a, die in Figur 1 dargestellt sind, aktuelle Werte als Startanzeige 6 angezeigt haben möchte oder nur zu einer festlegbaren Teilmenge der Parameter 6a.

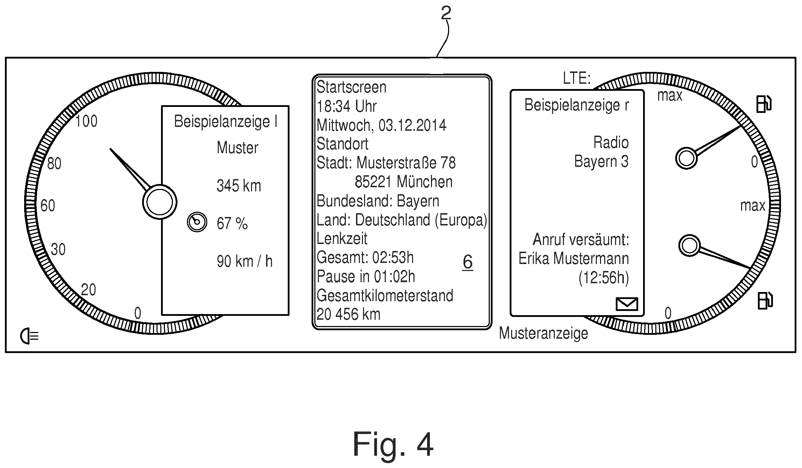

Ergänzend wird bemerkt, dass in der Darstellung der Figur 2 mit dem Bezugszeichen 6a lediglich beispielhafte Parameter bzw. Arten von Informationen aufgelistet sind, von denen dann im Startbildschirm die konkreten aktuellen Werte dargestellt sind. Dies ist beispielhaft in Figur 4 dargestellt. Hier sind beispielhaft konkrete Werte zur Uhrzeit und Datum inklusive Wochentag angezeigt sowie konkrete Angaben zum Standort und den Lenk- und Ruhezeiten.

Mögliche Parameter 6a, deren aktuelle Werte in der Startanzeige anzeigbar sind, umfassen: eine Uhrzeit- und Datumsangabe, vorzugsweise mit Angabe des aktuellen Wochentags, die Angabe einer Außentemperatur, die Angabe des Standorts des Fahrzeugs unter Angabe des nächstliegenden Ortsnamens zum aktuellen Standort und unter Angabe des aktuellen Bundeslandes bzw. der Region, in der sich das Fahrzeug aktuell befindet. Mögliche Parameter 6a umfassen ferner GPS-Koordinaten des aktuellen Standorts, Statusmeldungen des programmierbaren Weckers sowie einen Gesamtkilometerstand. Mögliche Parameter 6a umfassen ferner Füllstandsangaben zum Kraftstofftank und dem AdBlue®-Tank. Für die Führung des Fahrtenbuchs ist es vorteilhaft, dem Fahrer auch in dem Startbildschirm 6 Angaben zu den Lenk- und Ruhezeiten anzuzeigen. Ferner können Daten zum Frachtauftrag oder zu dem Zustand der Fracht, z. B. über das Kühlgut, angezeigt werden. Ferner sind Staumeldungen, die angezeigt werden, hilfreich für die Planung der Fahrtroute.

Die Besonderheit der Startanzeige 36 gemäß der Ausführungsvariante, die in Figur 3 dargestellt ist, liegt auch darin, dass ferner auf der Startanzeige 36 eine graphische Darstellung 6b des Kraftfahrzeugs dargestellt ist, wobei Statusinformationen 6c betreffend einen Betriebszustand des Kraftfahrzeugs unter Verwendung der graphischen Darstellung 6b des Kraftfahrzeugs angezeigt werden.

In Figur 3 ist beispielsweise eine Ego-Ansicht des Fahrzeugs dargestellt, wobei insbesondere Angaben zu Reifendruck anhand der Ego-Ansicht im Bereich der dargestellten Fahrzeugreifen visualisiert werden können.

Gemäß dem Ablauf in Figur 2 wird der Startbildschirm 6 oder 36 so lange angezeigt, bis eine vorbestimmte Startanzeige-Deaktivierungsbedingung in Schritt S4 erkannt wird. Ein Beispiel für eine Startanzeige-Deaktivierungsbedingung kann beispielsweise der Motorstart sein. Der Motorstart deutet darauf hin, dass der Fahrer seine organisatorischen Tätigkeiten zur Vorbereitung der Fahrt, wie Routenplanung, Fahrtenbuchführung, Eingaben der Daten in den digitalen Thermographen etc., beendet hat und nun mit der Fahrt beginnen möchte. Es wird somit in Schritt S5 eine Erfüllung der Deaktivierungsbedingung detektiert, beispielsweise anhand des Motorstarts, und dann die Startanzeige in S6 beendet.

Im Ausführungsbeispiel der Figur 1 wird beispielsweise dann im Anzeigeabschnitt 5 der Anzeigefläche 2 der Startbildschirm 6 nicht mehr angezeigt, sondern es wird die Startbildschirmanzeige durch eine andere Anzeige im Anzeigeabschnitt 5 ersetzt, die beispielsweise Angaben des Navigationssystems, des Entertainmentsystems etc. enthält.

Im Beispiel der Figur 3 wird bei Erfüllung der Startanzeige-Deaktivierungsbedingung der Startbildschirm 36, der die Instrumente 7 und 8 überblendet, ausgeblendet, so dass die für den Fahrbetrieb vorgesehene "normale" Darstellung der Anzeigefläche 2 mit den Rundinstrumenten 7 und 8 und weiteren Anzeigen sichtbar wird.

### Bezugszeichenliste

- 1: Informationsanzeigevorrichtung
- 2: Anzeigefläche
- 3: Steuereinrichtung
- 4: Erkennungseinrichtung
- 5, 35: Anzeigeabschnitt
- 6, 36: Startinformationen, insbesondere Startbildschirm
- 36: Startinformationen, insbesondere Startbildschirm
- 7, 8: Virtuelle Rundinstrumente
- 6a: Paramater für angezeigbare Startinformationen
- 6b: Graphische Darstellung des Kraftfahrzeugs
- 6c: Statusinformationen des Kraftfahrzeugs

## Patentansprüche

1. Informationsanzeigevorrichtung (1) für ein Kraftfahrzeug, insbesondere für ein Nutzfahrzeug, welche aufweist:
eine Erkennungseinrichtung (4), die ausgebildet ist, zu ermitteln, ob eine Startanzeige-Aktivierungsbedingung erfüllt ist, aus der ableitbar ist, dass ein Fahrtbeginn des Kraftfahrzeugs unmittelbar bevorsteht oder zumindest wahrscheinlich ist;
eine Anzeigefläche (2); und
eine mit der Anzeigefläche (2) gekoppelte Steuereinrichtung (3), mit der eine wiedergebende Anzeige auf der Anzeigefläche (2) steuerbar ist und die ausgebildet ist, auf der Anzeigefläche (2) eine vorbestimmte Auswahl an Startinformationen (6) anzuzeigen, falls die Startanzeige-Aktivierungsbedingung erfüllt ist,
**dadurch gekennzeichnet, dass** die vorbestimmte Auswahl an Startinformationen (6) zumindest eine der folgenden Informationen umfasst:
a) aktuelle Standortdaten des Kraftfahrzeugs, mit einer alphanumerischen Angabe eines nächstliegenden Ortes und/oder einer Region, beispielsweise eines Bundeslands, in der sich das Kraftfahrzeug aktuell befindet;
b) Lenk- und Ruhezeitinformationen;
c) eine Information einer geladenen Fracht; und/oder
d) eine Information betreffend einen Frachtauftrag; und
wobei die Startanzeige-Aktivierungsbedingung erfüllt ist, wenn die Erkennungseinrichtung eine oder mehrere Situationen erkennt, die darauf schließen lassen, dass ein Fahrtantritt bevorsteht und nicht nur eine Wiederaufnahme einer Fahrt nach einer Pause oder einem zwischenzeitlichen Motoraus, beispielsweise bei einem Stau.

2. Informationsanzeigevorrichtung nach Anspruch 1, **dadurch gekennzeichnet,**
a) **dass** die erfüllte Startanzeige-Aktivierungsbedingung erfordert, dass ein Start eines Antriebsmotors des Kraftfahrzeugs noch nicht erfolgt ist; und/oder
b) **dass** die Steuereinrichtung ausgebildet ist, nach einem Motorstart die vorbestimmte Auswahl an Startinformationen (6) auf der Anzeigefläche nicht mehr anzuzeigen und durch eine andere Informationsanzeige zu ersetzen.

3. Informationsanzeigevorrichtung nach einem der vorhergehenden Ansprüche, **dadurch gekennzeichnet, dass** die vorbestimmte Auswahl an Startinformationen (6) mittels einer Eingabeeinrichtung von einem Nutzer konfigurierbar ist, insbesondere personalisierbar ist.

4. Informationsanzeigevorrichtung nach einem der vorhergehenden Ansprüche, **dadurch gekennzeichnet, dass** die Startanzeige-Aktivierungsbedingung erfüllt ist, wenn die Erkennungseinrichtung eine oder mehrere der folgenden Situationen erkennt:
- Ein Fahrer betritt das Kraftfahrzeug, insbesondere das Fahrerhaus,
- eine Fahrertür wird geöffnet,
- eine Person nimmt Platz auf dem Fahrersitz;
- Betätigung eines Bedienelements, beispielsweise auf einem Multifunktionslenkrad; und
- eine Aktivierung der Zündung;
- eine erfasste Temperatur liegt unterhalb eines vorbestimmten Schwellenwerts, wobei ein Unterschreiten des Schwellenwerts anzeigt, dass der Verbrennungsmotor des Kraftfahrzeugs nicht aufgewärmt ist.

5. Informationsanzeigevorrichtung nach einem der vorhergehenden Ansprüche, **dadurch gekennzeichnet, dass** die vorbestimmte Auswahl an Startinformationen zumindest eine der folgenden Informationen umfasst:
- eine Ruhezeit- und Datumsangabe, vorzugsweise unter Angabe des Wochentags;
- eine Außentemperaturangabe;
- GPS-Koordinaten des aktuellen Standorts,
- Angaben über die Tankfüllstände des Kraftstofftanks und/oder des AdBlue®-Tanks;
- einen Gesamtkilometerstand;
- Angaben über den Reifendruck und/oder den Druck in den Druckluftkreisen;
- Verkehrsmeldungen, inklusive Staumeldungen;
- Statusmeldungen über programmierbare Funktionen, beispielsweise eine Weckfunktion.

6. Informationsanzeigevorrichtung nach einem der vorhergehenden Ansprüche, **dadurch gekennzeichnet, dass** zur Darstellung der vorbestimmten Auswahl an Startinformationen (6) eine grafische Darstellung (6b) des Kraftfahrzeugs verwendet wird, wobei Statusinformationen (6c) betreffend einen Betriebszustand des Kraftfahrzeugs unter Verwendung der grafischen Darstellung (6b) des Kraftfahrzeugs angezeigt werden.

7. Informationsanzeigevorrichtung nach einem der vorhergehenden Ansprüche, **dadurch gekennzeichnet,**
a) dass die Anzeigefläche der Bildschirm eines Kombi-Instruments ist und
b1) dass die vorbestimmte Auswahl an Startinformationen in einem mittleren Bereich (5) auf der Anzeigefläche (2) ohne Überlappung anderer Anzeigen (7, 8) angezeigt wird; oder
b2) dass der Bereich (35) zur Anzeige der vorbestimmten Auswahl an Startinformationen (36) andere auf der Anzeigefläche (2) angezeigte Elemente (6, 7) überlappt.

8. Nutzfahrzeug, umfassend eine Informationsanzeigevorrichtung (1) nach einem der vorhergehenden Ansprüche.

## Claims

1. An information display device (1) for a motor vehicle, in particular for a utility vehicle, which has:
a detection apparatus (4) which is designed to determine whether a start display activation condition is satisfied, from which it can be derived that a start travel of the motor vehicle is directly imminent or at least probable;
a display area (2); and
a control device (3) which is coupled to the display area (2) and with which a display which is being presented on the display area (2) can be controlled and which is designed to display a predetermined selection of start information items (6) on the display area (2) if the start display activation condition is satisfied,
**characterized in that** the predetermined selection of start information items (6) comprises at least one of the following information items:
a) current location data of the motor vehicle, with an alpha numeric indication of the nearest location and/or a region, for example a German Federal State, in which the motor vehicle is currently located;
b) driving time and rest time information;
c) information about a loaded cargo; and/or
d) information relating to a cargo order; and
wherein the start display activation condition is satisfactory if the detection device detects one or more situations which make it possible to infer that a start of a journey is imminent, not only a resumption of a journey after a break or an intermediate engine deactivation, for example in the case of a traffic jam.

2. The information display device according to Claim 1, **characterized**
a) **in that** the satisfied start display activation condition requires that a start of a drive engine or motor of the motor vehicle has not yet taken place; and/or
b) **in that** the control device is designed no longer to display the predetermined selection of start information items (6) on the display area and to replace it with another information display after the start of engine or motor.

3. The information display device according to one of the preceding claims, **characterized in that** the predetermined selection of start information items (6) can be configured, in particular personalized, by a user by means of an input device.

4. The information display device according to one of the preceding claims, **characterized in that** the start display activation condition is satisfied if the detection device detects one or more of the following situations:
- a driver enters the motor vehicle, in particular the driver's cab,
- a driver's door is opened,
- a person sits down in the driver's seat;
- an operator control element, for example on a multifunctional steering wheel, is activated; and
- the ignition system is activated;
- a detected temperature lies below a predetermined threshold value, wherein dropping below the threshold value indicates that the internal combustion engine of the motor vehicle is not warmed up.

5. The information display device according to one of the preceding claims, **characterized in that** the predetermined selection of start information items comprises at least one of the following information items:
- a rest time indication and data indication, preferably indicating the day of the week;
- an indication of external temperature;
- GPS coordinates of the current location;
- indication about the filling levels of the fuel tank and/or of the AdBlue® tank;
- an overall kilometre reading;
- indications of the tyre pressure and/or the pressure in the compressed air circuits;
- traffic messages, including traffic jam reports;
- status messages about programmable functions, for example a wake-up function.

6. The information display device according to one of the preceding claims, **characterized in that** a graphic representation (6b) of the motor vehicle is used to represent the predetermined selection of start information items (6), wherein the status information items (6c) relating to an operating state of the motor vehicle are displayed using the graphic representation (6b) of the motor vehicle.

7. The information display device according to one of the preceding claims, **characterized**
a) in that the display area is the screen of a combination instrument, and
b1) in that the predetermined selection of start information items are displayed in a central region (5) on the display area (2) without overlapping with other displays (7, 8);
or
b2) in that the region (35) for displaying the predetermined selection of start information items (36) overlaps other elements (6, 7) displayed on the display area (2).

8. A utility vehicle, comprising an information display device (1) according to one of the preceding claims.

## Revendications

1. Dispositif d'affichage d'informations (1) pour un véhicule automobile, en particulier pour un véhicule utilitaire, comportant :
un dispositif de reconnaissance (4) qui est réalisé pour déterminer si une condition d'activation de démarrage est remplie qui permet de déduire qu'un départ du véhicule automobile est imminent ou du moins probable ;
une surface d'affichage (2) ; et
un dispositif de commande (3) couplé à la surface d'affichage (2) qui permet de commander un affichage de représentation sur la surface d'affichage (2) et qui est réalisé pour afficher sur la surface d'affichage (2) une sélection prédéterminée d'informations de démarrage (6) si la condition d'activation d'affichage de démarrage est remplie,
**caractérisé en ce que** la sélection prédéterminée d'informations de démarrage (6) comprend au moins l'une des informations suivantes :
a) des données de localisation actuelle du véhicule automobile, avec une indication alphanumérique d'un lieu le plus proche et/ou d'une région la plus proche, par exemple d'un département, où le véhicule automobile se trouve actuellement ;
b) des informations de conduite et de temps de repos ;
c) une information d'une cargaison chargée ; et/ou
d) une information concernant un ordre de transport ; et
dans lequel la condition d'activation d'affichage de démarrage est remplie si le dispositif de reconnaissance reconnaît une ou plusieurs situations qui permettent de conclure qu'un départ est imminent et pas seulement une reprise d'un parcours après une pause ou une coupure de moteur intermédiaire, par exemple en cas d'embouteillage.

2. Dispositif d'affichage d'informations selon la revendication 1, **caractérisé en ce que**
a) la condition d'activation d'affichage de démarrage remplie exige qu'un démarrage d'un moteur d'entraînement du véhicule automobile n'a pas encore eu lieu ; et/ou
b) le dispositif de commande est réalisé pour ne plus afficher la sélection prédéterminée d'informations de démarrage (6) sur la surface d'affichage et pour la remplacer par un autre affichage d'informations après un démarrage du moteur.

3. Dispositif d'affichage d'informations selon l'une quelconque des revendications précédentes, **caractérisé en ce que** la sélection prédéterminée d'informations de démarrage (6) peut être configurée, en particulier personnalisée, par un utilisateur au moyen d'un dispositif de saisie.

4. Dispositif d'affichage d'informations selon l'une quelconque des revendications précédentes, **caractérisé en ce que** la condition d'activation d'affichage de démarrage est remplie si le dispositif de reconnaissance reconnaît une ou plusieurs des situations suivantes :
- un conducteur monte dans le véhicule automobile, en particulier dans la cabine,
- une portière de conducteur est ouverte,
- une personne s'installe sur le siège de conducteur ;
- un actionnement d'un élément de commande, par exemple sur un volant multifonction ; et
- une activation de l'allumage ;
- une température détectée est située au-dessous d'une valeur seuil prédéterminée, un soupassement de la valeur seuil indiquant que le moteur à combustion interne du véhicule automobile n'a pas été mis à température.

5. Dispositif d'affichage d'informations selon l'une quelconque des revendications précédentes, **caractérisé en ce que** la sélection prédéterminée d'informations de démarrage comprend au moins l'une des informations suivantes :
- une indication de l'heure et de la date de repos, de préférence en spécifiant le jour de la semaine ;
- une indication d'une température extérieure ;
- des coordonnées GPS de la localisation actuelle,
- des indications concernant les niveaux de remplissage du réservoir de carburant et/ou du réservoir d'AdBlue® ;
- un kilométrage total ;
- des indications concernant la pression des pneus et/ou la pression dans les circuits d'air comprimé ;
- des informations routières, y compris des annonces d'embouteillage ;
- des messages d'état concernant des fonctions programmables, par exemple une fonction de réveil.

6. Dispositif d'affichage d'informations selon l'une quelconque des revendications précédentes, **caractérisé en ce que** pour la représentation de la sélection prédéterminée d'informations de démarrage (6), une représentation graphique (6b) du véhicule automobile est utilisée, des informations d'état (6c) concernant un état de fonctionnement du véhicule automobile étant affichées en utilisant la représentation graphique (6b) du véhicule automobile.

7. Dispositif d'affichage d'informations selon l'une quelconque des revendications précédentes, **caractérisé en ce que**
a) la surface d'affichage est l'écran d'un instrument combiné, et
b1) la sélection prédéterminée d'informations de démarrage est affichée dans une zone centrale (5) sur la surface d'affichage (2) sans recouvrir d'autres affichages (7, 8) ; ou
b2) la zone (35) destinée à l'affichage de la sélection prédéterminée d'informations de démarrage (36) recouvre d'autres éléments (6, 7) affichés sur la surface d'affichage (2).

8. Véhicule utilitaire, comprenant un dispositif d'affichage d'informations (1) selon l'une quelconque des revendications précédentes.
